# EUROPEAN PATENT SPECIFICATION

(11) **EP 3 572 996 B1**
(45) Date of publication and mention of the grant of the patent: **30.11.2022**
(21) Application number: 18382347.5
(22) Date of filing: 21.05.2018
(51) Int. Cl.: G06Q 10/08, G06Q 50/28, G01B 11/00, G06K 7/14, G06V 10/147, G06V 20/52, G06V 30/424

(54) **DEVICE AND METHOD FOR CONTAINERS CLASSIFICATION**
VORRICHTUNG UND VERFAHREN ZUR BEHÄLTERKLASSIFIZIERUNG
PROCÉDÉ ET DISPOSITIF DE CLASSIFICATION DE CONTENEURS

(43) Date of publication of application: 27.11.2019
(73) Proprietor: Automatizacion y Sistemas de Inspeccion en Linea Global, S.L., 33207 Gijón (ES)
(72) Inventor: Pérez Méndez, Antonio, 33207 Gijón (ES); Girela Baena, Lucas, 33207 Gijón (ES)
(74) Representative: Tribalyte Ideas

(56) References cited:
- WO-A1-2011/087454
- WO-A1-2018/022280
- WO-A2-2017/042747
- JP-A- 2003 172 605
- JP-B2- 3 597 283
- US-A1- 2012 057 022
- US-A1- 2012 274 784
- US-B1- 9 488 984

## Description

### FIELD OF THE INVENTION

The present invention relates to processes and systems for remote analysis of a group of containers.

### BACKGROUND

The invention is related to the field of analyzing supermarket boxes, of those which are used to contain supplies. These boxes are usually made of plastic and foldable, and are returned to the box supplier in large amount of boxes piled on a support or pallet and wrapped in a transparent film.

A box provider sends boxes to a supermarket supplier. The supermarket supplier, after using them, returns them to the box provider in order to check them, clean them and repair them, so that they are available for being delivered again.

Containers are usually manually counted and classified while they are demounted from the pile, and this is usually made one by one. This is not an easy task, mostly when the volume is high, it is costly and subject to human errors. Automation of this process would involve a way of unwrapping the pallet, separating the boxes and counting and classifying them one by one. Further, this should be made when the pallet is provided by the supermarket supplier, in order to check if the pallet contains all the boxes that are supposed to be given back before the supermarket supplier gets away from the delivery place. If a problem with the number and classification of boxes is immediately detected, the supermarket supplier may be warned in the same moment.

US 2012/057022 A1 discloses an apparatus for acquiring an image of a pallet load. This apparatus comprises a linescan camera arranged for movement in a movement plane to acquire the image. A method of acquiring an image of a pallet load is also provided. However, this document does not disclose the solution to some problems which are dealt with by the present invention.

A way of improving this process is therefore sought.

### SUMMARY OF THE INVENTION

The aforementioned problem is solved by a device for containers classification according to claim 1 and a method for containers classification according to claim 7. Particular embodiments of the invention are defined by dependent claims.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

In a first inventive aspect, the invention provides a device for containers classification, suitable for classifying containers which are piled on a platform or pallet, the device comprising
a conveying belt for transporting the pallet;
a first structure for pallet analysis,
a second structure configured to slide along a portion of the first structure, comprising a plurality of first radiation means suitable for emitting light in the infrared spectrum, a plurality of first image acquisition means suitable for obtaining images and/or data in the infrared spectrum, a plurality of second radiation means suitable for emitting light in the visible spectrum and a plurality of second image acquisition means suitable for obtaining images in the visible spectrum; and
data analysis means adapted to analyze the images and/or data obtained by the first image acquisition means and by the second image acquisition means and providing a classification of the containers piled on the pallet;
wherein the second structure comprises a first group of four faces orthogonal two by two, each of the faces of this group of four faces comprising a plurality of first radiation means and a plurality of second radiation means;
wherein the second structure comprises a second group of four faces orthogonal two by two which form 45° with the faces of the first group, wherein faces with radiation means and faces with image acquisition means alternate, wherein each face of the second group comprises a group of first image acquisition means and at least a second image acquisition means; and
wherein the second structure comprises motion means configured to move the second structure along a rail of the first structure from a first position where the second structure allows the platform or pallet to enter the first structure and a second position where the second structure surrounds the containers.

When talking about classification, it should be understood in a generic way, as any kind of obtaining features of the boxes to be classified, such as the number of boxes, the type of boxes, the particular model of each box, etc.

Acquired imagery and/or data may be treated as image or data or a combination of both. There are two different ways of representing and displaying acquired data, either pictorially or digitally, and both are interchangeable as they convey the same information. The term "acquired" does not necessarily mean that the information is stored or retained in any way, it just refers to the fact that a predetermined infrared signal is received or perceived by the first image acquisition means.

This device solves the problem of automating the process of classifying the containers, since the first acquisition means is configured to read through the plastic film and access to the containers without unwrapping them and separating them.

In the invention, the first and second radiation means are arranged to emit radiation in a substantially tangentially direction to the face of the boxes stack, so that glare is minimized.

In some particular embodiments, the second position is such that the positions of the first image acquisition means define a polyhedron, in such a way that a parallelepiped of 1200 mm high, 1200mm long and 800mm wide is inscriptible inside said polyhedron.

These dimensions are suitable for the vast majority of pallets which support commercial containers. The positions of the first image acquisition means are suitable for these means to surround the pallet and the containers.

In some particular embodiments, the conveying belt is configured to have a loading height lower than 10 cm. This makes the introduction of the pallet or container much easier, since this container is usually very heavy and raising it to 80 cm, which is the typical height of the loading edge, is very dangerous.

These second image acquisition means contribute to the analysis with colour data of the containers, since the colour of some containers contributes to their easier identification.

In some particular embodiments, the first image acquisition means comprised in each face of the second group are suitable for covering 5000 px in 1450 mm in width.

This way of acquiring the image and/or data is particularly advantageous for commercial containers.

In some particular embodiments, the second image acquisition means comprised in each face of the second group are suitable for covering 5000 px in 1450 mm in width.

This arrangement of the second image acquisition means is consistent with the arrangement of the first image acquisition means, since these second image acquisition means are intended to acquire the same image range of the first image acquisition means.

In some particular embodiments, each face which comprises radiation means comprises at least two first radiation means and at least two second radiation means.

A first radiation means and a second radiation means is intended to emit radiation over a face of the containers stack and the other pair of radiation means is intended to emit radiation on a perpendicular face of the containers stack.

In some particular embodiments, each of the first and second radiation means comprises lugs to avoid glaring.

In some particular embodiments, some image acquisition means are arranged fixed to the first structure and are not affected by the motion means.

The rails allow that a reduced number of image acquisition means is used, and the way of covering the whole surface of the pallet is that a reduced number of cameras make several shots from different locations. This is a way of reducing the cost of this device.

In a further inventive aspect, the invention provides a method for containers classification which are piled on a platform or pallet, the method comprising the steps of
acquiring images and/or data of the containers by means of a device according to the first inventive aspect, the images and/or data being acquired in at least four different planes; and
analyzing the images and/or data to provide a classification of containers.

This method is particularly advantageous to achieve an automation in the process of classifying the containers.

In some particular embodiments, the data analysis means are configured to analyse at least one of the following criteria:
alphanumeric signal found in each container by OCR;
identification of BIDI codes in each container;
identification of external contours of each container;
identification of internal contours of each container; and/or
identification of the dominant colour of each container.

These aspects are surprisingly effective in the identification and classification of commercial containers.

In some particular embodiments, the data analysis means are configured to run algorithms based on neural networks, which are intended for machine learning, by using data of previous analysis.

Machine learning improves the result of this method.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a perspective view of a device for containers classification according to the invention.
Figures 2a and 2b shows a detail of two different positions of the device of Figure 1.
Figures 3a and 3b show a front view and a top view of a schematic arrangement of the first image acquisition means in the first structure of a device for containers classification according to the invention.

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

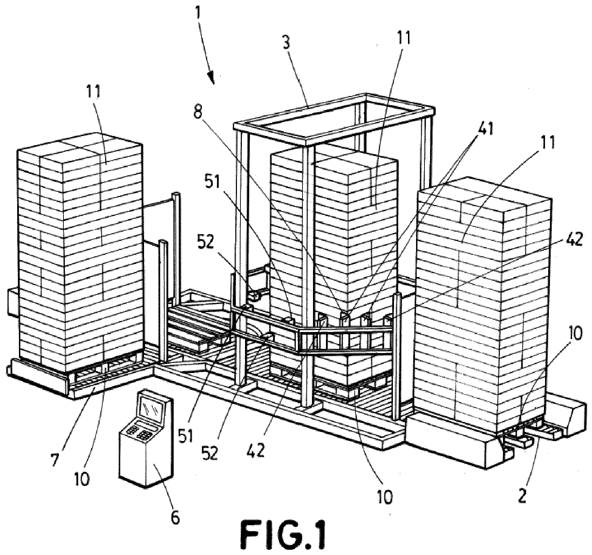

Figure 1 shows a perspective view of a device 1 for containers classification according to the invention. This device 1 is suitable for classifying containers which are piled on a pallet 10. These pallets are usually provided with several containers 11 folded and piled, and the assembly is wrapped in a transparent film.

This device 1 comprises
a conveying belt 2 for transporting the pallet 10;
a first structure 3 for pallet analysis, the first structure 3 comprising first radiation means 41, second radiation means 42, first image acquisition means 51 and second image acquisition means 52;
data analysis means 6, such as an image processing software, adapted to analyze the images and/or data obtained by the first image acquisition means and providing a classification of the containers 11 piled on the pallet 10.

The first radiation means 41 are configured to emit light in the infrared spectrum and the second radiation means 42 are configured to emit light in the visible spectrum. On the other hand, the first image acquisition means 51 are suitable for obtaining images and/or data in the infrared spectrum and the second image acquisition means 52 are suitable for obtaining images in the visible spectrum. The combination of first and second image acquisition means provide a complete picture of the arrangement of the containers 11: the infrared images are not influenced by the transparent film and the colour images provide colour information to the infrared images.

The conveying belt 2 has a loading height lower than 10 cm. This is particularly advantageous when entering the pallet 10 into the device 1.

As may be seen in this figure, the device 1 also comprises a secondary path 7 intended to be used by packages which have not been correctly classified.

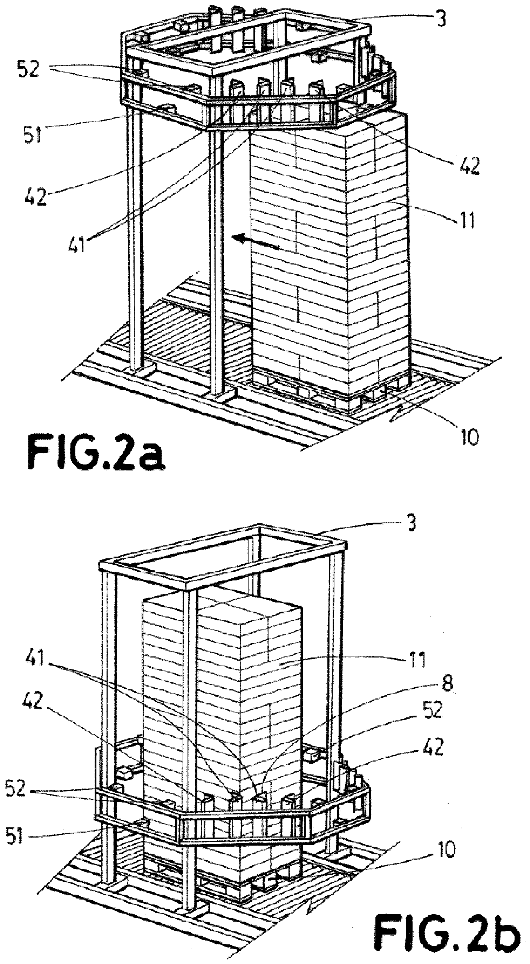

Figures 2a and 2b shows a detail of two different positions of the device of Figure 1. Figure 2a shows the device of Figure 1 in a first position, where a motor moves some of the first image acquisition means 51 and second image acquisition means 52 to a first position, so that the pallet 10 is allowed to enter the first structure 3. On the other hand, figure 2b shows the device 1 where the motor moves back the first image acquisition means 51 and second image acquisition means 52 to a second position, where the first image acquisition means 51 and second image acquisition means 52 surround the containers 11 and are ready to take the images.

When the pallet 10 is inside the first structure 3, the following steps are followed:
acquiring images and/or data of the containers by means of the first and second image acquisition means, with the aid of the radiation means, which provides different types of light to enable image acquisition; and
analyzing the images and/or data to provide a classification of containers.

The radiation is important, since the presence of a protective film around the boxes stack makes it difficult the analysis of raw images. Infrared radiation means provide an important source of radiation which makes this detection and identification easier.

The data analysis means are configured to analyse at least one of the following criteria:
alphanumeric signal found in each container by OCR;
identification of BIDI codes in each container;
identification of external contours of each container;
identification of internal contours of each container; and/or
identification of the dominant colour of each container.

The data analysis means are configured to run algorithms based on neural networks, which are intended for machine learning, using data of previous analysis as feedback for each analysis step.

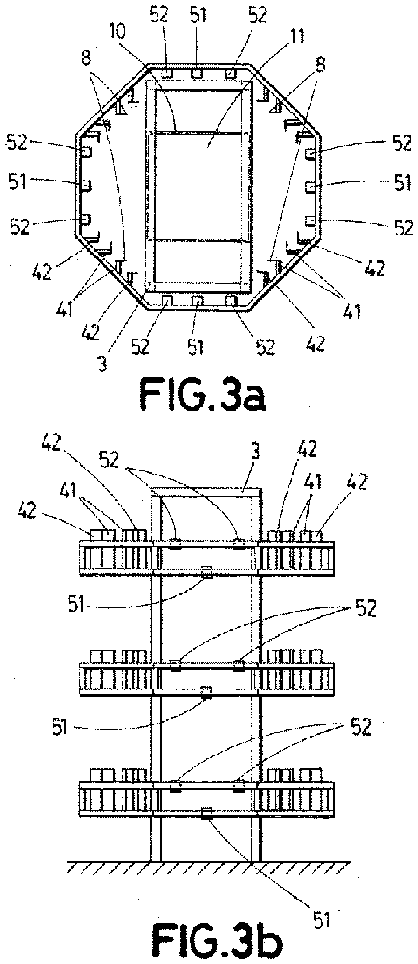

Figures 3a and 3b show a front view and a top view of a schematic arrangement of the first image acquisition means in the first structure.

Figure 3a shows a front view of one of the four faces where the image acquisition means are arranged. As shown in Figure 2b, the first image acquisition means 51 and second image acquisition means 52 are arranged in four orthogonal faces, while the first radiation means 41 and the second radiation means 42 are also arranged in four orthogonal faces, in such a way that they form an octagonal structure, wherein a side with acquisition means is adjacent to a side with radiation means and vice versa. This octagonal structure is configured to be slid up and down to acquire the images of the pallet and the boxes stacked on it. The positions of the first image acquisition means define a polyhedron, in such a way that a parallelepiped of 1200 mm high, 1200mm long and 800mm wide is inscriptible inside said polyhedron. These are the approximate dimensions of the pallet, so the first and second image acquisition means surround the pallet when images are acquired. Each of the four sides which support radiation means comprise four radiation means, two of them are first radiation means 41 and the other two are second radiation means 42. Every radiation means also comprises a lug 8 intended to avoid glaring.

The radiation means are located in these sides because they provide the radiation tangentially to the boxes stack. Further, these radiation means comprise lugs to avoid the reflection of the radiation emitted in the face of the stack.

In Figure 3b, different positions of the structure comprising the radiation means 41, 42 and the image acquisition means 51, 52 are shown at the same time. In some embodiments, the device comprises three independent structures, so that all the images are acquired at the same time. In the present invention, there is only one structure with the radiation means and the image acquisition means, and this structure is moved to acquire the images consecutively.

## Claims

1. Device (1) for containers classification, suitable for classifying containers (11) which are piled on a platform or pallet (10), the device (1) comprising
a conveying belt (2) for transporting the pallet (10);
a first structure (3) for pallet analysis,
a second structure (8) configured to slide along a portion of the first structure (3), comprising a plurality of first radiation means (41) suitable for emitting light in the infrared spectrum, a plurality of first image acquisition means (51) suitable for obtaining images and/or data in the infrared spectrum, a plurality of second radiation means (42) suitable for emitting light in the visible spectrum and a plurality of second image acquisition means (52) suitable for obtaining images in the visible spectrum; and
data analysis means (6) adapted to analyze the images and/or data obtained by the first image acquisition means (51) and by the second image acquisition means (52) and providing a classification of the containers piled on the pallet; wherein the second structure (8) comprises a first group of four faces orthogonal two by two, each of the faces of this group of four faces comprising a plurality of first radiation means (41) and a plurality of second radiation means (42);
wherein the second structure (8) comprises a second group of four faces orthogonal two by two which form 45° with the faces of the first group, wherein faces with radiation means and faces with image acquisition means alternate, wherein each face of the second group comprises a group of first image acquisition means (51) and at least a second image acquisition means (52); and
wherein the second structure comprises motion means configured to move the second structure along a rail of the first structure from a first position where the second structure (8) allows the platform or pallet (10) to enter the first structure and a second position where the second structure (8) surrounds the containers (11).

2. Device (1) for containers classification according to any of the preceding claims, wherein the conveying belt (2) is configured to have a loading height lower than 10 cm.

3. Device (1) for containers classification according to any of the preceding claims, wherein the first image acquisition means (51) comprised in each face of the second group are suitable for covering 5000 px in 1450 mm in width.

4. Device (1) for containers classification according to claim 3, wherein the second image acquisition means (52) comprised in each face of the second group are suitable for covering 5000 px in 1450 mm in width.

5. Device (1) for containers classification according to claim 4, wherein each face which comprises radiation means comprises at least two first radiation means and at least two second radiation means.

6. Device (1) for containers classification according to claim 5, wherein each of the first and second radiation means comprises lugs (8) to avoid glaring.

7. Method for containers classification which are piled on a platform or pallet, the method comprising the steps of
acquiring images and/or data of the containers by means of a device according to any of the preceding claims, the images and/or data being acquired in at least four different planes; and
analyzing the images and/or data to provide a classification of containers.

8. Method for containers classification according to claim 7, wherein the data analysis means are configured to analyse at least one of the following criteria:
alphanumeric signal found in each container by OCR;
identification of BIDI codes in each container;
identification of external contours of each container;
identification of internal contours of each container; and/or
identification of the dominant colour of each container.

9. Method for containers classification according to any of claims 7 or 8, wherein the data analysis means are configured to run algorithms based on neural networks, which are intended for machine learning, using data of previous analysis.

## Patentansprüche

1. Vorrichtung (1) zur Behälterklassifizierung, geeignet zur Klassifizierung von Behältern (11), die auf einer Plattform oder Palette (10) gestapelt sind, wobei die Vorrichtung (1) Folgendes umfasst:
ein Förderband (2) für den Transport der Palette (10);
eine erste Struktur (3) für die Palettenanalyse,
eine zweite Struktur (8), die so ausgebildet ist, dass sie entlang eines Abschnitts der ersten Struktur (3) gleitet, umfassend eine Vielzahl von ersten Strahlungsmitteln (41), die geeignet sind, Licht im Infrarotspektrum zu emittieren, eine Vielzahl von ersten Bilderfassungsmitteln (51), die geeignet sind, Bilder und/oder Daten im Infrarotspektrum zu gewinnen, eine Vielzahl von zweiten Strahlungsmitteln (42), die geeignet sind, Licht im sichtbaren Spektrum zu emittieren, und eine Vielzahl von zweiten Bilderfassungsmitteln (52), die geeignet sind, Bilder im sichtbaren Spektrum zu gewinnen; und
Datenanalysemittel (6), die angepasst sind, um die von den ersten Bilderfassungsmitteln (51) und von den zweiten Bilderfassungsmitteln (52) gewonnenen Bilder und/oder Daten zu analysieren und eine Klassifizierung der auf der Palette gestapelten Behälter bereitzustellen;
wobei die zweite Struktur (8) eine erste Gruppe von vier zueinander zwei zu zwei orthogonalen Flächen umfasst, wobei jede der Flächen dieser Gruppe von vier Flächen eine Vielzahl von ersten Strahlungsmitteln (41) und eine Vielzahl von zweiten Strahlungsmitteln (42) umfasst; wobei die zweite Struktur (8) eine zweite Gruppe von vier zueinander zwei zu zwei orthogonalen Flächen umfasst, die mit den Flächen der ersten Gruppe einen Winkel von 45° bilden, wobei sich Flächen mit Strahlungsmitteln und Flächen mit Bilderfassungsmitteln abwechseln, wobei jede Fläche der zweiten Gruppe eine Gruppe von ersten Bilderfassungsmitteln (51) und mindestens ein zweites Bilderfassungsmittel (52) umfasst; und
wobei die zweite Struktur ein Bewegungsmittel umfasst, das so ausgebildet ist, dass es die zweite Struktur entlang einer Schiene der ersten Struktur von einer ersten Position, in der die zweite Struktur (8) es der Plattform oder Palette (10) ermöglicht, in die erste Struktur einzutreten, und einer zweiten Position, in der die zweite Struktur (8) die Behälter (11) umgibt, bewegt.

2. Vorrichtung (1) zur Behälterklassifizierung nach einem der vorhergehenden Ansprüche, wobei das Förderband (2) so ausgebildet ist, dass es eine Ladehöhe von weniger als 10 cm aufweist.

3. Vorrichtung (1) zur Behälterklassifizierung nach einem der vorhergehenden Ansprüche, wobei die ersten Bilderfassungsmittel (51), die in jeder Fläche der zweiten Gruppe enthalten sind, geeignet sind, 5000 px bei einer Breite von 1450 mm abzudecken.

4. Vorrichtung (1) zur Behälterklassifizierung nach Anspruch 3, wobei die zweiten Bilderfassungsmittel (52), die in jeder Fläche der zweiten Gruppe enthalten sind, geeignet sind, 5000 px bei einer Breite von 1450 mm abzudecken.

5. Vorrichtung (1) zur Behälterklassifizierung nach Anspruch 4, wobei jede Fläche, die Strahlungsmittel umfasst, mindestens zwei erste Strahlungsmittel und mindestens zwei zweite Strahlungsmittel umfasst.

6. Vorrichtung (1) zur Behälterklassifizierung nach Anspruch 5, wobei jedes der ersten und zweiten Strahlungsmittel Laschen (8) zur Vermeidung von Blendung umfasst.

7. Verfahren zur Behälterklassifizierung, die auf einer Plattform oder Palette gestapelt sind, wobei das Verfahren folgende Schritte umfasst:
Erfassen von Bildern und/oder Daten der Behälter mittels einer Vorrichtung nach einem der vorhergehenden Ansprüche, wobei die Bilder und/oder Daten in mindestens vier verschiedenen Ebenen erfasst werden; und
Analysieren der Bilder und/oder Daten, um eine Klassifizierung der Behälter bereitzustellen.

8. Verfahren zur Behälterklassifizierung nach Anspruch 7, wobei die Datenanalysemittel ausgebildet sind, um mindestens eines der folgenden Kriterien zu analysieren:
alphanumerisches Signal, das in jedem Behälter durch OCR gefunden wird;
Identifizierung von BIDI-Codes in jedem Behälter;
Identifizierung der externen Konturen jedes Behälters;
Identifizierung der inneren Konturen jedes Behälters; und/oder
Identifizierung der vorherrschenden Farbe jedes Behälters.

9. Verfahren zur Behälterklassifizierung nach einem der Ansprüche 7 oder 8, wobei die Datenanalysemittel so ausgebildet sind, dass sie Algorithmen ausführen, die auf neuronalen Netzen basieren, die für maschinelles Lernen bestimmt sind, unter Verwendung von Daten vorheriger Analysen.

## Revendications

1. Dispositif (1) pour le classement de conteneurs, approprié pour classer des conteneurs (11) qui sont empilés sur une plate-forme ou palette (10), le dispositif (1) comprenant
une bande transporteuse (2) pour le transport de la palette (10) ;
une première structure (3) pour l'analyse des palettes,
une seconde structure (8) configurée pour coulisser le long d'une partie de la première structure (3), comprenant une pluralité de premiers moyens de rayonnement (41) adaptés pour émettre de la lumière dans le spectre infrarouge, une pluralité de premiers moyens d'acquisition d'images (51) adaptés pour obtenir des images et/ou des données dans le spectre infrarouge, une pluralité de seconds moyens de rayonnement (42) adaptés pour émettre de la lumière dans le spectre visible et une pluralité de seconds moyens d'acquisition d'images (52) adaptés pour obtenir des images dans le spectre visible ; et
des moyens d'analyse de données (6) adaptés pour analyser les images et/ou les données obtenues par les premiers moyens d'acquisition d'images (51) et par les seconds moyens d'acquisition d'images (52) et fournissant une classification des conteneurs empilés sur la palette ;
dans lequel la seconde structure (8) comprend un premier groupe de quatre faces orthogonales deux à deux, chacune des faces de ce groupe de quatre faces comprenant une pluralité de premiers moyens de rayonnement (41) et une pluralité de seconds moyens de rayonnement (42) ;
dans laquelle la deuxième structure (8) comprend un deuxième groupe de quatre faces orthogonales deux à deux qui forment 45° avec les faces du premier groupe, dans laquelle les faces avec des moyens de rayonnement et les faces avec des moyens d'acquisition d'image alternent, dans laquelle chaque face du deuxième groupe comprend un groupe de premiers moyens d'acquisition d'image (51) et au moins un deuxième moyen d'acquisition d'image (52) ; et
dans lequel la seconde structure comprend des moyens de mouvement configurés pour déplacer la seconde structure le long d'un rail de la première structure à partir d'une première position où la seconde structure (8) permet à la plate-forme ou à la palette (10) d'entrer dans la première structure et une seconde position où la seconde structure (8) entoure les conteneurs (11).

2. Dispositif (1) de classement de conteneurs selon l'une quelconque des revendications précédentes, dans lequel la bande transporteuse (2) est configurée pour avoir une hauteur de chargement inférieure à 10 cm.

3. Dispositif (1) de classification de récipients selon l'une quelconque des revendications précédentes, dans lequel les premiers moyens d'acquisition d'images (51) compris dans chaque face du deuxième groupe sont adaptés pour couvrir 5000 px en 1450 mm de largeur.

4. Dispositif (1) de classification de récipients selon la revendication 3, dans lequel les seconds moyens d'acquisition d'images (52) compris dans chaque face du second groupe sont aptes à couvrir 5000 px sur 1450 mm de largeur.

5. Dispositif (1) de classification de récipients selon la revendication 4, dans lequel chaque face qui comprend des moyens de rayonnement comprend au moins deux premiers moyens de rayonnement et au moins deux seconds moyens de rayonnement.

6. Dispositif (1) de classification de conteneurs selon la revendication 5, dans lequel chacun des premiers et seconds moyens de rayonnement comprend des ergots (8) pour éviter l'éblouissement.

7. Procédé de classification de conteneurs qui sont empilés sur une plate-forme ou une palette, le procédé comprenant les étapes suivantes
acquérir des images et/ou des données des conteneurs au moyen d'un dispositif selon l'une quelconque des revendications précédentes, les images et/ou les données étant acquises dans au moins quatre plans différents ; et
analyser les images et/ou les données pour fournir une classification des conteneurs.

8. Procédé de classification de conteneurs selon la revendication 7, dans lequel les moyens d'analyse de données sont configurés pour analyser au moins un des critères suivants :
signal alphanumérique trouvé dans chaque conteneur par OCR ;
identification des codes BIDI dans chaque conteneur ;
identification des contours externes de chaque conteneur ;
identification des contours internes de chaque conteneur ; et/ou
identification de la couleur dominante de chaque conteneur.

9. Procédé de classification de conteneurs selon l'une quelconque des revendications 7 ou 8, dans lequel les moyens d'analyse de données sont configurés pour exécuter des algorithmes basés sur des réseaux neuronaux, qui sont destinés à l'apprentissage automatique, en utilisant des données d'analyses précédentes.
